# EUROPÄISCHE PATENTSCHRIFT

(11) **EP 1 310 536 B1**
(45) Veröffentlichungstag und Bekanntmachung des Hinweises auf die Patenterteilung: **13.12.2006**
(21) Anmeldenummer: 02022768.2
(22) Anmeldetag: 11.10.2002
(51) Int. Cl.: C09J 4/06, C08F 265/06, C09J 133/08

(54) **Wässriger Dispersionsklebstoff und dessen Verwendung als Kaschierkleber**
Aqueous dispersion adhesive and its use as laminating adhesive
Adhésif à base d'une dispersion aqueuse et son utilisation en tant qu'adhésif pour stratifiés

(30) Priorität: 26.10.2001 DE 10152441
(43) Veröffentlichungstag der Anmeldung: 14.05.2003
(73) Patentinhaber: Dynea Moers GmbH, 47443 Moers (DE)
(72) Erfinder: Conrads, Martin, Dr., 47509 Rheurdt (DE); Matthäus, Harald, 62146 Würselen (DE); Hüskes, Heinz, 47839 Krefeld (DE)
(74) Vertreter: Schupfner, Gerhard D.

(56) Entgegenhaltungen:
- US-B1- 6 288 190

## Beschreibung

Gegenstand der Erfindung sind wässrige Dispersionsklebstoffe auf Basis von (Meth)Acrylatcopolymeren mit Zusätzen an UV-reaktiven Vernetzer und UV-Initiatoren, sowie deren Verwendung zur Folienkaschierung.

Das Vereinigen einer Folie mit einer weiteren an dieser haftenden Kunststofffolie wird als Kaschieren bezeichnet. Hierbei ist die Kunststofffolie zumindest einseitig mit einem sogenannten Kaschierkleber zur Verbindung der Kunststoff-Folie mit der zu beschichtenden Folienbahn versehen. In der Regel handelt es sich bei den Folien um bahnförmige Materialien aus beispielsweise Papier, Kunststoffen, Textilien, mit Metall oder Metalloxiden bedampfte Kunststofffolien oder Metallfolien. Die mit dem Kaschierklebstoff beschichtete Folie ist in der Regel eine Polymerfolie wie z.B. eine orientierte PP-Folie.

Das so erhältliche Produkt wird als Folienverbundwerkstoff bezeichnet. Folienverbundwerkstoffe bestehen aus flächigen Materialien unterschiedlicher Flexibilität und Oberflächenstruktur und sind bei Herstellung, Verarbeitung und Gebrauch einer Reihe von Belastungen ausgesetzt, die an den die Verbindung zwischen den Materialien schaffenden Klebstoff in Bezug auf mechanische Eigenschaften des Klebstoffs hohe Anforderungen stellen.

Da es sich üblicherweise bei den zu verklebenden, bahnförmigen Materialien um Materialien mit hoher Flexibilität handelt, die bei Herstellung, Verarbeitung und Gebrauch ständig Zug- und Biegebewegungen ausgesetzt sind, muss der Klebstoff selbst über eine ausreichend hohe Flexibilität verfügen, um die dabei auftretenden Belastungen ohne Beschädigung oder Auflösung der Klebeverbindung zu überstehen.

Der Klebstoff muss außerdem in der Regel auch in Bezug auf Kristallisationsneigung und Verfärbung eine Reihe von Kriterien erfüllen, insbesondere bei Verklebung transparenter Kunststofffolien.

Unter Glanzfolienkaschierung versteht man das Überziehen von flächigen Druckerzeugnissen, z.B. aus Papier oder Karton, mit einer optisch klaren, glänzenden Folie. Durch die Glanzfolienkaschierung wird die Brillanz der Druckfarben, die Widerstandsfähigkeit gegen äußere Einwirkungen (Zerkratzen, Ausbleichen, Feuchtigkeit) und damit der praktische Gebrauchswert verbessert.

Gleichmäßige Benetzung und Verlauf des Kaschierklebstoffes auf der Folie sind wesentliche Voraussetzungen für hohe Brillanz. Dafür muss der Klebstofffilm während des Kaschiervorgangs plastisch und fließfähig sein. Nachteil solcher Klebefilme ist, dass diese nicht ausreichend schnell durchhärten und während des Aufbringens und kurz nach dem Aufbringen noch so weich sind, dass dies bei einer anschließenden Nutung und Prägung zu einer partiellen Trennung (Delaminierung) von Folie und Untergrund führen kann. Darüber hinaus führen plastisch fließende Klebstofffilme bei Stanz- und Schneidevorgängen nach erfolgter Kaschierung durch Anhaften zu einer Verschmutzung der Schneidewerkzeuge, die eine verringerte Standzeit dieser Werkzeuge bewirkt.

Für die Glanzfolienkaschierung wurden daher bereits chemisch nachvernetzende Polymerdispersionen vorgeschlagen. Allerdings erfolgt die Nachvernetzung bei Kaschiermitteln, wie sie z. B. in der EP 0 644 902-B1 offenbart werden, nicht sofort, sondern so zeitverzögert, dass die hergestellten Kaschierfolien zunächst einige Stunden zwischengelagert werden müssen, bevor sie weiterverarbeitet werden können. Diese Zwischenlagerung wird als nachteilig empfunden, weil sie einer raschen Auftragsbearbeitung und Qualitätskontrolle entgegensteht.

Aus diesem Grund wurden UV-vernetzbare Dispersionen für die Folienkaschierung vorgeschlagen, wie sie beispielsweise in der DE 199 16 663-A1 beschrieben sind. Hier ist ein Fotoinitiator an das Polymergerüst der Kaschierklebers gebunden. Diese Systeme weisen eine geringe Flexibilität hinsichtlich der Verarbeitungsbedingungen auf, da durch den Einsatz der Fertigmischung alle wesentlichen Verfahrensparameter (zumindest hinsichtlich der notwendigen UV-Dosis) unveränderlich festgelegt sind und während der Klebstoffformulierung nur noch ein geringer Spielraum zur Anpassung des Klebverhaltens und des Aushärtens an Verfahrensparameter wie Temperatur, Luftfeuchtigkeit oder Besonderheiten der zu beschichtenden Folie besteht.

Bei UV-härtenden Beschichtungen werden üblicherweise polyfunktionelle Acrylatester oder Polyacrylatester zur Nachvernetzung initiiert durch den UV-Initiator eingesetzt, da diese über eine hohe Reaktivität verfügen und leicht durchpolymerisiert werden können. Methacrylate gelten in diesen Systemen als weniger geeignet, da sie zu langsam polymerisieren und zur vollständigen Polymerisation eine zu hohe Strahlungsdichte oder zu viel an Initiator erfordern.

Aufgabe der vorliegenden Erfindung ist es, die oben beschriebenen Nachteile des Standes der Technik zu überwinden, und insbesondere Dispersionsklebstoffe bereitzustellen, welche eine breitere Variation der Verfahrensbedingungen und eine sofortige Weiterverarbeitung der Laminate ohne Zwischenlagerung ermöglichen.

Im Hinblick auf eine hohe Brillanz der Laminate sollen diese frei von Koagulat, lichtbeständig und schaumarm sein. Weiterhin sollen die Klebstoffe eine gute Haftung zu möglichen Substraten, insbesondere zu Druckfarben und Papiererzeugnissen, aufweisen.

Die Aufgabe wird erfindungsgemäß gelöst durch einen wässrigen Dispersionsklebstoff auf Basis von Acrylatcopolymeren und/oder Methacrylatcopolymeren mit Zusätzen von reaktiven Vernetzern, insbesondere UV-reaktiven Vernetzern, dadurch gekennzeichnet, dass
- zumindest ein Vernetzer eine Methacryl-Verbindung der allgemeinen Formel 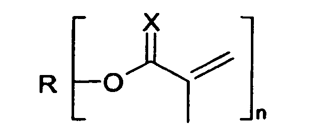
ist, worin
- n: für eine ganze Zahl von 2 bis 8, vorzugsweise 2 bis 4, steht,
- X: ggf. für jedes n unterschiedlich, für O und/oder NH steht, und
- R: ein Kohlenwasserstoff-Rest mit 2 bis 20, vorzugsweise 3 bis 10 Kohlenstoffatomen ist, der ggf. 1 bis 10 Sauerstoffatome in Form von Etherbindungen (-O-) und/oder Hydroxylgruppen (-OH) aufweist und der Dispersionsklebstoff einen UV-Initiator (C) enthält.

Vorzugsweise wird der UV-Initiator dem wässrigen Dispersionsklebstoff auf Basis von (Meth)Acrylatcopolymeren während der Endformulierung zugesetzt, d.h. UV-Initiator und ggf. auch Vernetzer werden dem Dispersionsklebstoff vor Auftrag auf die Kunststofffolien zugemischt und nicht bereits bei der Herstellung von Vorstufen oder Vorprodukten zugesetzt. Der Dispersionsklebstoff kann jedoch auch so formuliert sein, dass dieser bereits vor Anwendung UV-Initiator enthält, jedoch zur Anpassung an die Verarbeitungsbedingungen weiterer UV-Initiator und/oder reaktiver Vernetzer zudosiert werden kann. Vorzugsweise wird der UV-Initiator erst kurz vor Anwendung zugesetzt.

Der Vernetzer ist herstellbar durch mehrfache Veresterung eines polyfunktionellen Alkohols oder Etheralkohols mit insgesamt 2 bis 20 Kohlenstoffatomen, der ggf. alkoxyliert ist, mit einer Methacrylsäure-Verbindung wie Methacrylsäure, Methacrylsäureanhydrid oder einem niederen Ester der Methacrylsäure bzw. entsprechender Methacrylamid-Verbindungen. Der Vernetzer weist vorzugsweise ein Molgewicht von < 500 g/mol auf. Der polyfunktionelle Alkohol kann beispielsweise mit 1 bis 10 C2- bis C4- Alkylenoxid-Einheiten, insbesondere mit Ethylenoxid und/oder Propylenoxideinheiten, alkoxyliert sein. Vorzugsweise enthält der Vernetzer keine oder nur eine freie OH-Gruppe.

Als Alkohole sind z.B. geeignet 1,6-Hexandiol, 1,4-Butandiol, Ethylenglykol, Propylenglykol, Diethylenglykol, Dipropylenglykol, Triethylenglykol, Tripropylenglykol, 1,4-Cylclohexandiol, Glycerin, Trimethylolpropan, Neopentylglykol, Pentaerythrit und DiPentaerythrit sowie die ethoxylierten und/oder propoxylierten Derivate vorgenannter Alkohole.

Das (Meth)Acrylatcopolymer weist bevorzugt eine Glasübergangstemperatur von kleiner+ 30°C, besonders bevorzugt -10 bis + 15 °C auf.

Der erfindungsgemäße Dispersionsklebstoff enthält als Bindemittel eine wässrige Copolymerdispersion. Das Polymer ist vorzugsweise aufgebaut aus radikalisch polymerisierbaren Monomeren. Vorzugsweise besteht das Polymer aus folgenden Hauptmonomeren: C1-C10-Alkyl(meth)acrylaten, Vinylestern von bis zu 11 C-Atomen enthaltenden Carbonsäuren und Styrol, wobei im allgemeinen Mischungen dieser Monomere verwendet werden. Diese Hauptmonomere werden zusammen mit 1 bis 5 Gew.-% Acryl- oder Methacrylsäure polymerisiert. Daneben werden als sogenannte Hilfsmonomere eingesetzt z. B. Acryl- oder Methacrylamid, Fumarsäure, Maleinsäure, Ethoxylate der genannten Säuren, Glycidyl(meth)acrylat oder die oben genannten difunktionellen Acrylate- und Methacrylate. Ganz besonders bevorzugt sind als Hauptmonomere (zu größer 90, vorzugsweise > 98%) Methylmethacrylat, Butylacrylat, 2-Ethylhexylacrylat und Styrol sowie Mischungen dieser Monomere. Besonders bevorzugt werden Copolymerdispersionen aus Styrol und n-Butylacrylat und/oder 2-Ethyhexylacrylat oder Copolymerdispersionen aus Methylmethacrylat und n-Butylacrylat und/oder 2-Ethyhexylacrylat. Das Mischungsverhältnis der Monomere orientiert sich an der gewünschten Glasübergangstemperatur. Die Glasübergangstemperatur des Polymers liegt bevorzugt unter 30°C, besonders bevorzugt beträgt diese -10 bis + 15 °C.

Das Polymer wird vorzugsweise als Emulsionspolymerisat durch Emulsionspolymerisation in Wasser hergestellt. Bei dieser Emulsionspolymerisation werden ionische und/oder nichtionische Emulgatoren und/oder Schutzkolloide bzw. Stabilisatoren als grenzflächenaktive Verbindungen verwendet. Eine Auswahl geeigneter Emulgatoren und Schutzkolloide findet sich z. B. in Hölscher, Dispersionen synthetischer Hochpolymere, Springer-Verlag Berlin 1969 oder Houben-Weyl, Methoden der organischen Chemie, Bd. XIV/1, ThiemeVerlag Stuttgart 1961. Eingesetzt werden üblicherweise 0,2 bis 10 Gew.-% bezogen auf das zu polymerisierende Monomer.

Geeignete Initiatoren für die Emulsionspolymerisation sind z.B. die Ammonium- und Alkalimetallsalze der Peroxidischwefelsäure oder organische Peroxide, z. B. tert.-Butylhydroperoxid. Besonders geeignet sind Redox-lnitiatorsysteme, wie sie z. B. beschrieben werden in: Blackley, Emulsions Polymerisation, Applied Science Publishers London, 1975.

Die Entfernung der Restmonomeren nach dem Ende der eigentlichen Emulsionspolymerisation kann sowohl durch eine chemische Nachbehandlung als auch durch physikalische Verfahren erfolgen.

Als UV-Initiator kann der erfindungsgemäße Dispersionsklebstoff einen Photoinitiator oder ein Gemisch aus zwei oder mehr Photoinitiatoren enthalten. Der Photoinitiator ist in der Lage, strahlungsinduziert die Vernetzungsreaktion zu initiieren. Insbesondere sind hierzu Photoinitiatoren geeignet, die unter Einwirkung von elektromagnetischer Strahlung, insbesondere unter Lichteinwirkung, eine radikalische Reaktion initiieren. Der im Rahmen der vorliegenden Erfindung eingesetzte Photoinitiator ist dazu in der Lage, nach Bestrahlung mit Licht einer Wellenlänge von etwa 200 bis etwa 450 nm eine Vernetzung zu initiieren. In einer bevorzugten Ausführungsform der Erfindung erfolgt die Initiierung bei Bestrahlung mit Licht einer Wellenlänge von etwa 220 bis etwa 380 nm.

Als UV-Initiatoren können beispielsweise oligomere Hydroxyketone oder Hydroxyphenylketone ggf. im Gemisch mit Benzophenonen eingesetzt werden, wie z. B. Speedcure^{®} BEM (Rahn), Speedcure^{®} MBB, Speedcure^{®} PBZ, Esacure^{®} KIP 150 (Lamberti), Esacure^{®} KIP EM oder lrgacure^{®} 500 (Ciba).

Als weitere Zusätze kann der Dispersionsklebstoff z. B. Emulgatoren, Netzmittel, Verdicker und Entschäumer enthalten.

Der UV-vernetzbare Klebstoffe enthält vorzugsweise (ohne den Wasseranteil der (Meth)Acrylatcopolymer-Dispersion und bezogen auf die Summe der Komponenten (A), (B) und (C):
(A) 73 bis 97,8 Gew.-% (Meth)Acrylatcopolymere,
(B) 2 bis 24 Gew.-% , vorzugsweise 10 bis 20 Gew.%, eines Vernetzers und
(C) ggf. 0,2 bis 3 Gew.-% , vorzugsweise 0,4 bis 1 Gew.-%, eines UV-Initiators.

Die (Meth)Acrylatcopolymer-Dispersion weist vorzugsweise einen Wasseranteil von 45 bis 60 Gew.-% auf.

Weiterhin bevorzugt ist der wässrige Dispersionsklebstoff erhältlich durch Zusammenbringen von
(A) 76,5 bis 98,9 Gew.-% einer wässrigen (Meth)Acrylatcopolymerdispersion mit einem Feststoffanteil von 45 bis 60 Gew.-% mit
(B) 1 bis 12 Gew.-%, vorzugsweise 5 bis 10 Gew.%, eines Vernetzers,
(C) ggf. 0,1 bis 1,5 Gew.-%, vorzugsweise 0,2 bis 0,5 Gew.%, eines UV-Initiators (bezogen auf die Aktivsubstanz) und
(D) 0 bis 10 Gew.-% weiterer Zusätze.

Die fertige wässrige (Meth)Acrylatcopolymerdispersion (A) wird zur Formulierung des Dispersionsklebers mit 1 bis 12 Gew.-% des erfindungsgemäßen Methacrylatvernetzers (B) versetzt. Die Menge des zugegebenen UV-Initiators (C) hängt von der gewünschten Verarbeitungsgeschwindigkeit ab und bewegt sich üblicherweise zwischen 0,1 und 1,5 Gew.-%, vorzugsweise werden 0,2 bis 0,5 Gew.-% zugegeben, bezogen auf das Gesamtgewicht des wässrigen Dispersionklebers aus (A), (B), (C) und ggf. weiteren Zusätzen (D).

Der Dispersionskleber kann erfindungsgemäß als Kaschierklebstoff eingesetzt werden, bevorzugt als Kaschierklebstoff zur Glanzfolienkaschierung.

Überraschenderweise hat sich gezeigt, dass der Methacrylatvernetzer (B) ein besonders geeigneter UV-Vernetzer für wässrige Dispersionsklebstoffe ist. Der Fachmann ist wegen der geringen Aktivität von Methacrylsäureestern bisher davon ausgegangen, dass diese zur Vernetzung von (Meth)Acrylatpolymeren ungeeignet sind. Im Unterschied zu den üblicherweise verwendeten Kaschierklebern, erlauben die erfindungsgemäßen Dispersionsklebstoffe eine sofortige Weiterverarbeitung (z. B. Schneiden, Stanzen, Falzen oder Prägen) der Produkte nach der Kaschierung.

Zur Verarbeitung wird der Dispersionskleber in einer dünnen Schicht auf die transparente Kaschierfolie aufgetragen und getrocknet. Anschließend wird die Folie mit Hilfe einer Walze auf das Substrat (Papier, Karton) aufgepresst und anschließend mittels eines handelsüblichen UV-Strahlers belichtet. Die Weiterverarbeitung der Laminate durch Schneiden, Prägen, Nuten, Stanzen usw. kann sofort nach dieser Bestrahlung erfolgen. Der auf diese Weise erhaltene Verbund weist selbst bei Verwendung kritischer Druckfarben eine hohe Haftfestigkeit auf, was sich in einer hohen Brillanz im Bereich der Nuten oder Prägungen zeigt.

Ein weiterer Vorteil der Erfindung ist die Möglichkeit, Initiatoren und Vernetzer nachträglich zuzumischen, so dass der Verarbeiter den Klebstoff an die jeweiligen Verfahrensbedingungen anpassen kann. Die eingesetzten Methacrylatvernetzer weisen weiterhin eine geringere Hautreizung als vergleichbare Acrylatvernetzer (d. h. solche mit vergleichbarem Molgewicht und vergleichbarer Doppelbindungsdichte) auf.

Als mit einem Kaschierkleber zu beschichtende Kunststofffolie sind geeignet Polyacetat-Folien, PP-Folien, PE-Folien und Polyesterfolien. Die mit dem Kaschierkleber beschichtete Folie wird vorzugsweise auf folgende Materialien aufgebracht: Papier, Glanzkarton, Kunststoffe, Textilien oder mit Metall oder Metalloxiden bedampfte Kunststofffolien. Als Kunststofffolien werden bevorzugt orientierte Polypropylenfolien eingesetzt.

### Versuchsbeispiele

### Beispiel 1 Dispersion A (erfindungsgemäß)

In einem Reaktionsgefäß wurden 370 g entionisiertes Wasser, 0,9 g Natriumperoxodisulfat, 22 g Styrol, 22 g Butylacrylat, 15,5 g DISPONIL^{®} AES 13 IS (Fa. Cognis) und 10 g Nonylphenolethoxylat-20EO vorgelegt. Das Reaktionsgefäß wurde auf 85°C aufgeheizt. Anschließend wurden während einer Stunde gleichzeitig 30 g Natriumperoxodisulfatlösung (2%ig) und eine Mischung aus 165 g Styrol, 235g 2-Ethylhexylacrylat und 15 g Acrylsäure so zudosiert, dass die Reaktortemperatur 95°C nicht überschritt. Nach Zugabe von 20 g Natriumperoxodisulfatlösung (2%ig) wurde eine Stunde bei 95°C nachpolymerisiert. Die fertige Dispersion wurde abgekühlt und mit Natronlauge (25%ig) auf pH 7 bis 7,5 eingestellt. Bei 20°C wurden innerhalb von 20 Minuten 10 g Glycidylmethacrylat zudosiert. Es wurde dann noch für 120 Minuten bei 20 °C gerührt. Anschließend wurde filtriert und der Festkörperanteil mit Wasser auf 50 % eingestellt. Unter starkem Rühren wurden nacheinander 18 g 1,6-Hexandioldimethacrylat und 1,5 g Speedcure® BEM zugefügt.

### Vergleichsbeispiel Dispersion B ohne UV-Vernetzer:

In einem Reaktionsgefäß wurden 370 g entionisiertes Wasser, 0,9 g Natriumperoxodisulfat, 22g Styrol, 22g Butylacrylat, 15,5 g DISPONIL^{®} AES 13 IS (Fa. Cognis) und 10 g Nonylphenolethoxylat-20EO vorgelegt. Das Reaktionsgefäß wurde auf 85°C aufgeheizt. Anschließend wurden während einer Stunde gleichzeitig 30 g Natriumperoxodisulfatlösung (2%ig) und eine Mischung aus 165 g Styrol, 235g 2-Ethylhexylacrylat und 15 g Acrylsäure so zudosiert, dass die Reaktortemperatur 95°C nicht überschritt. Nach Zugabe von 20 g Natriumperoxodisulfatlösung (2%ig) wurde eine Stunde bei 95°C nachpolymerisiert. Die fertige Dispersion wurde abgekühlt und mit Natronlauge (25%ig) auf pH 7 bis 7,5 eingestellt und filtriert. Anschließend wurde der Festkörper mit Wasser auf 50% eingestellt.

### Messung der anwendungstechnischen Eigenschaften

Zum anwendungstechnischen Test wurden die Dispersionen auf einen orientierte Polypropylen-Folie (12 µm Dicke) mit einem Trockengewicht von 8 - 10 g/m² aufgetragen und bei 20°C getrocknet. Anschließend wurde diese Folie gegen einen handelsüblichen Druckbogen kaschiert.

Die UV-härtende Dispersion wurde dann sofort mit 80 W/cm bei einer Bandgeschwindigkeit von 10 m/min belichtet. An diesen Kaschierungen wurden dann Prägefestigkeit und Schnitteigenschaften (3-Seitenschnitt) geprüft. Die Prägetests wurden sofort, nach 1 Tag Raumtemperaturlagerung und nach 3 Tagen Raumtemperaturlagerung durchgeführt. Der 3-Seitenschnitt wurden nach 1 Tag Raumtemperaturlagerung durchgeführt. Zum Vergleich wurde eine handelübliche, chemisch-vernetzende Dispersion zur Glanzfolienkaschierung eingesetzt (Acronal^{®} 310 S der Firma BASF)

Die Beurteilung der Prägung erfolgte mit Hilfe eines Mikroskops, wobei die Haftung der Folie zum Untergrund im Bereich der Prägung benotet wurde (1: sehr gute Haftung, 2: einzelne Haftungsbrüche, 3: geringe Delaminierung, 4: teilweise Delaminierung, 5: vollständige Delaminierung). Die Beurteilung der Schnitteigenschaften erfolgte anhand der Verschmutzung der Messer und der Schneidekante mit Klebstoff. Die Ergebnisse dieses Tests sind in nachfolgender Tabelle aufgelistet.

In Tabelle 1 ist zu erkennen, dass die erfindungsgemäßen Dispersionskleber (A) nach der UV-Härtung eine sehr gute Haftung aufweisen, während die chemisch vernetzende Dispersionskleber bzw. die Dispersionskleber (B) ohne UV-Vernetzer nach kurzer Trockenzeit delaminieren und selbst nach einer Trockenzeit von 3 Tagen Haftungsbrüche aufweisen.

**Tabelle 1**

| **Dispersionskleber auf Basis von** | **Prägung sofort** | **Prägung nach 1 d** | **Prägung nach 3 d** | **3-Seitenschnitt nach 1 d** |
|---|---|---|---|---|
| Dispersion A vor UV-Härtung | 5 | 5 | 5 | sehr schlecht |
| Dispersion A nach UV-Härtung | 1 | 1 | 1 | gut |
| Dispersion B | 5 | 5 | 5 | sehr schlecht |
| Chemisch ver- netzende Dispersion | 5 | 5 | 2 | ausreichend |

## Patentansprüche

1. Wässriger Dispersionsklebstoff auf Basis von (Meth)Acrylatcopolymeren (A) mit Zusätzen von Vernetzern (B), **dadurch gekennzeichnet, dass**
zumindest ein Vernetzer (B) eine Methacryl-Verbindung der allgemeinen Formel 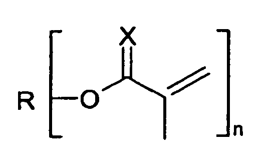 ist, worin
n für eine ganze Zahl von 2 bis 8, vorzugsweise 2 bis 4, steht,
X ggf. für jedes n unterschiedlich, für O und/oder NH steht, und
R ein Kohlenwasserstoff-Rest mit 2 bis 20, vorzugsweise 3 bis 10 Kohlenstoffatomen ist, der ggf. 1 bis 10 Sauerstoffatome in Form von Etherbindungen (-O-) und/oder Hydroxylgruppen (-OH) aufweist und
der Dispersionsklebstoff einen UV-Initiator (C) enthält.

2. Dispersionklebstoff gemäß Anspruch 1, **dadurch gekennzeichnet, dass** der Dispersionklebstoff einen UV-Initiator (C) enthält, der dem Klebstoffsystem erst während der Formulierung des Klebstoffsystems zugesetzt wird.

3. Dispersionsklebstoff gemäß Anspruch 1 oder 2, **dadurch gekennzeichnet, dass** der Dispersionsklebstoff den Vernetzer (B) zu 1 bis 10 Gew.-% enthält, bezogen auf die Gesamtzusammensetzung des Dispersionsklebstoffs.

4. Dispersionsklebstoff gemäß einem der vorhergehenden Ansprüche, **dadurch gekennzeichnet, dass** der Vernetzer (B)
y Gruppen -(OR')_{z}-
aufweist, worin, jeweils unabhängig von jedem X und z,
y ein ganze Zahl von 1 bis 8, vorzugsweise 1 bis 4,
R' ein C1- bis C8-, vorzugsweise ein C2- bis C4-, Kohlenstoff-Rest und
z ein ganze Zahl von 1 bis 20, vorzugsweise 2 bis 6, ist.

5. Dispersionsklebstoff gemäß einem der vorhergehenden Ansprüche, **dadurch gekennzeichnet, dass** der Vernetzer (B) ein Molgewicht von < 500 g/mol aufweist.

6. Dispersionsklebstoff gemäß einem der vorhergehenden Ansprüche, **dadurch gekennzeichnet, dass** das (Meth)Acrylatcopolymer eine Glasübergangstemperatur von kleiner + 30°C, vorzugsweise -10 bis + 15 °C aufweist.

7. Dispersionsklebstoff gemäß einem der vorhergehenden Ansprüche, **dadurch gekennzeichnet, dass** der Dispersionsklebstoff zu 0,1 bis 1,5 Gew.-% UV-Initiator (C) enthält, bezogen auf die Gesamtzusammensetzung des Dispersionsklebstoffs.

8. Dispersionsklebstoff gemäß einem der vorhergehenden Ansprüche, **dadurch gekennzeichnet, dass** der Dispersionsklebstoff aus
(A) 76,5 bis 99 Gew.-% einer wässrigen (Meth)Acrylatcopolymerdispersion mit Feststoffanteil von 40 bis 60 Gew%,
(B) 1 bis 12 Gew.-%, vorzugsweise 4 bis 10 Gew.-%, des Vernetzers (B),
(C) 0,1 bis 1,5 Gew.-%, vorzugsweise 0,2 bis 0,5 Gew.-%, eines UV-Initiators, bezogen auf die Aktivsubstanz, und ggf.
(D) 0 bis 10 Gew.-%, vorzugsweise 0,2 bis 4 Gew.-%, weiteren Zusätzen
besteht.

9. Verwendung des Dispersionsklebers gemäß einem der Ansprüche 1 bis 8 als Kaschierklebstoff.

10. Verwendung des Dispersionskleber gemäß einem der Ansprüche 1 bis 8 als Kaschierklebstoff zur Glanzfolienkaschierung.

## Claims

1. An aqueous dispersion adhesive based on (meth)acrylate copolymers (A) with additives of crosslinking agents (B),
**characterized in that**
at least one crosslinking agent (B) is a methacryl compound of the general formula 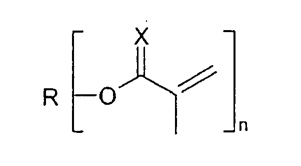 wherein
n stands for an integer from 2 to 8, preferably 2 to 4,
X is optionally different for each n and stands for O and/or NH, and
R is a hydrocarbon radical having two to twenty carbon atoms, preferably three to ten carbon atoms, optionally having one to ten oxygen atoms in the form of ether linkages (-O-) and/or hydroxyl groups (-OH), and
the dispersion adhesive contains a UV initiator (C).

2. The dispersion adhesive according to Claim 1,
**characterized in that**
the dispersion adhesive contains a UV initiator (C) which is added to the adhesive system only during formulation of the adhesive system.

3. The dispersion adhesive according to Claim 1 or 2,
**characterized in that**
the dispersion adhesive contains the crosslinking agent (B) in an amount of 1 to 10 percent by weight, based on the total composition of the dispersion adhesive.

4. The dispersion adhesive according to any one of the preceding claims,
**characterized in that**
the crosslinking agent (B) contains
y groups - (OR')_{z}-
wherein, independently of each X and z,
y is an integer from 1 to 8, preferably 1 to 4,
R' is a C₁ to C₈ carbon radical, preferably a C₂ to C₄ carbon radical, and
z is an integer from 1 to 20, preferably 2 to 6.

5. The dispersion adhesive according to any one of the preceding claims,
**characterized in that**
the crosslinking agent (B) has a molecular weight of <500 g/mol.

6. The dispersion adhesive according to any one of the preceding claims,
**characterized in that**
the (meth)acrylate copolymer has a glass transition temperature of less than +30°C, preferably -10°C to +15°C.

7. The dispersion adhesive according to any one of the preceding claims,
**characterized in that**
the dispersion adhesive contains 0.1 to 1.5 percent by weight UV initiator (C), based on the total composition of the dispersion adhesive.

8. The dispersion adhesive according to any one of the preceding claims,
**characterized in that**
the dispersion adhesive consists of
(A) 76.5 to 99 percent by weight of an aqueous (meth)-acrylate copolymer dispersion having a solids content of 40 to 60 percent by weight,
(B) 1 to 12 percent by weight, preferably 4 to 10 percent by weight, of the crosslinking agent (B),
(C) 0.1 to 1.5 percent by weight, preferably 0.2 to 0.5 percent by weight of a UV initiator, based on the active substance, and optionally
(D) 0 to 10 percent by weight, preferably 0.2 to 4 percent by weight additional additives.

9. The use of the dispersion adhesive according to any one of Claims 1 through 8 as a lamination adhesive.

10. The use of the dispersion adhesive according to any one of Claims 1 through 8 as a lamination adhesive for glossy film lamination.

## Revendications

1. Dispersion aqueuse adhésive à base de copolymères de (méth)acrylate (A) avec des additions de réticulants (B), **caractérisée en ce que**
au moins un réticulant (B) est un composé méthacrylique de formule générale 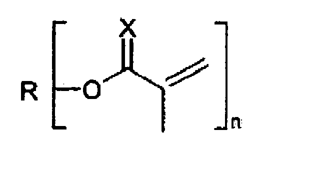 dans laquelle
n représente un nombre entier de 2 à 8, de préférence de 2 à 4,
X représente, le cas échéant pour chaque n différent, O et/ou NH, et
R représente un radical hydrocarbure ayant de 2 à 20, de préférence de 3 à 10 atomes de carbone, qui présente, le cas échéant, de 1 à 10 atomes d'oxygène sous forme de liaisons éthers (-O-) et/ou groupes hydroxyles (-OH) et
la dispersion adhésive contient un initiateur d'UV (C).

2. Dispersion adhésive selon la revendication 1, **caractérisée en ce que** la dispersion adhésive comprend un initiateur d'UV (C) qui est ajouté au système adhésif seulement pendant la formulation du système adhésif.

3. Dispersion adhésive selon la revendication 1 ou 2, **caractérisée en ce que** la dispersion adhésive comprend le réticulant (B) de 1 à 10 % en poids, par rapport à la composition totale de la dispersion adhésive.

4. Dispersion adhésive selon l'une des revendications précédentes, **caractérisée en ce que** le réticulant (B) comprend
y groupes -(OR')_{z}-
où, à chaque fois indépendamment de chaque X et z,
y est un nombre entier de 1 à 8, de préférence de 1 à 4,
R' est un radical carbone en C₁ à C₈, de préférence en C₂ à C₄, et
z est un nombre entier de 1 à 20, de préférence de 2 à 6.

5. Dispersion adhésive selon l'une des revendications précédentes, **caractérisée en ce que** le réticulant (B) présente un poids molaire < 500 g/mole.

6. Dispersion adhésive selon l'une des revendications précédentes, **caractérisée en ce que** le copolymère de (méth)acrylate présente une température de transition vitreuse inférieure à +30°C, de préférence de -10 à +15°C.

7. Dispersion adhésive selon l'une des revendications précédentes, **caractérisée en ce que** la dispersion adhésive comprend de 0,1 à 1,5 % en poids d'un initiateur d'UV (C), par rapport à la composition totale de la dispersion adhésive.

8. Dispersion adhésive selon l'une des revendications précédentes, **caractérisée en ce que** la dispersion adhésive est constituée de
(A) 76,5 à 99 % en poids d'une dispersion aqueuse de copolymère de (méth)acrylate ayant une teneur en matières solides de 40 à 60 % en poids,
(B) 1 à 12 % en poids, de préférence 4 à 10 % en poids, du réticulant (B),
(C) 0,1 à 1,5 % en poids, de préférence de 0,2 à 0,5 % en poids, d'un initiateur d'UV, par rapport à la substance active, et le cas échéant
(D) 0 à 10 % en poids, de préférence 0,2 à 4 % en poids, d'autres additifs.

9. Utilisation de la dispersion adhésive selon l'une des revendications 1 à 8 comme adhésif de stratification.

10. Utilisation de la dispersion adhésive selon l'une des revendications 1 à 8 comme adhésif de stratification pour la stratification de feuilles brillantes.
